(19)

Europäisches
Patentamt

European
Patent Office

Office européen
des brevets

(11) **EP 3 098 528 A1**

(12) **EUROPEAN PATENT APPLICATION**

(43) Date of publication:
**30.11.2016 Bulletin 2016/48**

(51) Int Cl.:
**F24F 11/00** (2006.01)   **F24F 7/00** (2006.01)
**G05D 22/02** (2006.01)

(21) Application number: **16167317.3**

(22) Date of filing: **27.04.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **29.04.2015 SE 1550527**

(71) Applicant: **eGain Sweden AB**
**434 37 Kungsbacka (SE)**

(72) Inventor: **JOHANSSON, Anton**
**432 45 Göteborg (SE)**

(74) Representative: **Zacco Sweden AB**
**Valhallavägen 117**
**Box 5581**
**114 85 Stockholm (SE)**

(54) **METHOD FOR DETERMINING VENTILATION RATE WITHIN AN INDOOR ENVIRONMENT**

(57)   The invention relates to a method for determining ventilation rate within an indoor environment by means of a processing unit and a sensor module. The method comprises the steps of: gathering of indoor environmental data from the indoor environment by means of a sensor module, wherein the data comprises a value on the humidity level in the indoor environment, identifying a humidity point load of increased level of humidity in said indoor environment based on said gathered indoor environmental data, and determining the ventilation rate based on a dilution characteristic of the measured humidity levels following said humidity point load.

FIG. 1

EP 3 098 528 A1

## Description

TECHNICAL FIELD

The present disclosure relates to a method for determining ventilation rate within an indoor environment. In particular, the present disclosure relates to a method for determining ventilation rate within an indoor environment based on the step of gathering indoor environmental data from the indoor environment by means of a sensor module.

In addition, the present disclosure relates to a processing unit configured for implementing a method for determining ventilation rate within an indoor environment.

BACKGROUND ART

Ventilation systems for indoor environments are typically used for supplying outdoor air to a building in order to maintain an acceptable indoor air quality. As an example, ventilation is intended to remove or dilute pollutants and to control the thermal environment and humidity in buildings. Typically, the process of changing or replacing air in a building may either be achieved by mechanical (forced) ventilation or natural ventilation, and may include both exchange of air to the outside as well as circulation of air within the building.

In particular, ventilation may remove unpleasant smells and excessive moisture, introduces outside air and prevent stagnation of the interior air. Thus, it is known in the art that ventilation usually reduces indoor moisture levels. Furthermore, it has also been acknowledged that very high indoor humidity levels are associated with increased growth of microorganisms such as mould and bacteria. Thus, humidity level is an important parameter when considering determining operational parameters for a ventilation system. In fact, it has been observed that humidity and moisture is a major cause of building damage, and that many buildings or apartments are subjected to high humidity levels over time due to inadequate ventilation or long-lasting deficiencies in the ventilation systems. These types of problems typically have a strong economic effect, as maintenance and repair of extensive problems may be expensive.

In some buildings, one or several sensors may be arranged indoor in order to provide input to the ventilation system with respect to temperature, humidity etc. in this type of systems, the ventilation system can be directly controlled based on the gathered information from the sensors in order to adapt the ventilation rate according to a set value of the temperature level or the humidity level.

However, since humidity levels may vary considerably over time within buildings and also within individual apartments, the most optimal ventilation rate may be different over time within buildings and individual apartments. Thus, although methods and systems for measuring humidity and temperature are known in the art, little is still known about how to control a ventilation system in an efficient manner, while taking environmental aspects into consideration.

With increasing understanding of the problems represented by moisture, it would be desirable to determine the ventilation rate in an indoor environment so that precautions can be initiated or implemented at an early stage in order to reduce the risks of degrading the indoor environment. In addition, it would be desirable to determine the ventilation rate to allow for a better understanding on suitable operating conditions of the ventilation system in the indoor environment. In particular, it would be desirable to increase the possibilities for the users of the system, such as property owners, to make more precise adjustments of the ventilation system to maintain a healthy and effective ventilation rate, which may also contribute to minimize, or at least reduce, the risk of mould growth. Further, it would be desirable to provide a method that allows for evaluating if an indoor environment is over or under ventilated according to recommended codes and standards.

Finally, it would be desirable to provide a method for determining the ventilation rate in an indoor environment in a cost-efficient manner.

SUMMARY OF THE INVENTION

Ventilation is the process of changing or replacing air in any space to control temperature or remove any combination of moisture, odours, smoke, heat, dust, airborne bacteria, or carbon dioxide, and to replenish oxygen. Ventilation includes both the exchange of air with the outside as well as circulation of air within the building. It is one of the most important factors for maintaining acceptable indoor air quality in buildings. Further, methods for ventilating a building may be divided into mechanical/forced and natural types.

It is an object of example embodiments of the disclosure to provide an improved method for determining ventilation rate within an indoor environment, which is based on indoor environmental data gathered from the indoor environment.

This and other objects, which will become apparent in the following, are accomplished by a method for determining ventilation rate within an indoor environment as defined in the accompanying independent claim. Details of some further example embodiments and optional features are recited in the associated dependent claims.

According to a first aspect, there is provided a method for determining ventilation rate within an indoor environment by means of a processing unit and a sensor module. The method comprises the steps of:

- gathering of indoor environmental data from the indoor environment by means of the sensor module, wherein the indoor environmental data comprises a value on the humidity level in the indoor environment,

- identifying a humidity point load of increased level of humidity in the indoor environment based on the gathered indoor environmental data,

- determining a ventilation rate based on a dilution characteristic of the measured humidity levels following said humidity point load.

Hereby, it becomes possible to determine the ventilation rate in a cost-efficient, yet accurate manner by using a vast amount of data in the form of environmental data as input and further processing and analysing the quantitative data as mentioned above such that the ventilation rate can be determined over time in the indoor environment. In particular, the step of gathering and analysing the indoor environmental data in conjunction with the step of identifying the humidity point load provide an effective measure for determining the ventilation rate in the indoor environment based on a dilution characteristic of the measured humidity levels in the indoor environment. The method can be considered cost-efficient in the sense that the method is able to make use of a conventional set-up of a sensor module(s) already being installed in the indoor environment. Thus, the method allows for determining the ventilation rate in the indoor environment by an existing set-up of humidity sensor(s), which may sometimes include a combination of humidity sensors and temperature sensors. Alternatively, in some indoor environments where no sensor module(s) is yet installed, it is to be noted that the method may be implemented and operated without any significant installation costs due to that the gathering of environmental data in the indoor environment can be performed by commercially available sensor module(s).

The configuration of the method according to example embodiments further enables that the steps of the method may be automatically performed. Thus, there is no need for end-users or operators of the method to access the indoor environment to install temporary sensors or use portable sensor modules each time there is a need or desire to determine the ventilation rate of the indoor environment.

Further, the method according to example embodiments allows for estimating whether the humidity levels in the indoor environment are reduced to an acceptable level in terms of health and comfort. In addition, the method according to example embodiments allows for estimating whether the humidity levels in the indoor environment are low enough in order to maintain the building's integrity.

Typically, the example embodiments of the method may be operated on a continuous basis. Thus, there is provided a method capable of continuously measuring humidity levels in an indoor environment and identifying one or several humidity point loads in order to determine the ventilation rate.

In the context of the example embodiments of the invention, the term "ventilation rate" as mentioned above typically refers to a determination of an average value of the ventilation rate for a given time range following the time point relating to the humidity point load. As an example, if the method is monitoring (i.e. gathering) and receiving indoor environmental data and a humidity point load is identified based on an analysis of the gathered indoor environmental data, the ventilation rate is determined based on a dilution characteristic of the measured humidity levels following said identified humidity point load, e.g. over a time range of 4h following the time point of the identified humidity point load.

By the step of identifying a humidity point load of increased level of humidity in the indoor environment based on the gathered indoor environmental data, the method is configured to determine when there is a temporary increase in the level of humidity so that the step of determining the ventilation rate based on a dilution characteristic of the measured humidity levels is performed at a point of time when there is a humidity climate in the indoor environment possibly associated with a malfunction of the ventilation system, over or under ventilation of the indoor environment and/or an unhealthy indoor environment climate. To this end, the identification of the humidity point load provides a means for and an indication on when to perform the step of determining the ventilation rate based on the dilution characteristic.

Further, by identifying a humidity point load in the indoor environment according to example embodiments, the method is capable of determining the ventilation rate and possibly finding indications on any deficiencies in the ventilation rate based on an analysis of a great amount of environmental indoor data that generally amounts to a relatively monotonous type of data, including a great amount of humidity level data over time. One advantage with the step of identifying a humidity point load from the relatively monotonous data is that the method is configured to discern whether the current ventilation process and the ventilation system is capable or incapable of mitigating the effects of the temporary increase of the humidity levels (corresponding to a temporary increase of the moisture content).

It should be conceivable, however, that although humidity point loads are points of increased level of moisture content that may typically contribute to generate humidity related problems in the indoor environment, a humidity point load is merely a reflection of the humidity level at a given time, while humidity related problems often arise as a consequence of having a constant high level of humidity over an extended time.

In other words, the method is configured to take monitored historical conditions in the indoor environment over a given time into consideration, while sorting out specific indoor environmental data (i.e. in the form of humidity point loads) reflecting an indication of e.g. a deficiency of the ventilation or the ventilation system.

It has been observed that an indoor environment having a constant high level of humidity (or moisture content) oven time without adequate ventilation may eventually lead to or increase the risk of mold growth, i.e. microbial contaminants. Without being bound by any theory, the level of moisture content or humidity in an indoor environment space such as an apartment is dependent on three factors: (1) The moisture content of the fresh air introduced into the indoor space via the air/ventilation flow. (2) Indoor internal loads such as cooking activities, use of warm water, laundering /drying of clothes and human activities. This type of loads contributes to an increased level of moisture content typically corresponding to a point load for a given time. (3) Air turnover (change of air), i.e. replacement of interior air with outside air. The temporary increased level of moisture content caused by the indoor internal loads is typically reduced by replacing the existing interior air with fresh outside air. However, in some indoor environments, the indoor air ventilation system is unable to mitigate the effects of the temporary increase of the moisture content. It would thus be particularly interesting to monitor and determine the level of the moisture content within the indoor environment in order to allow for a better control of the level of the moisture content and to enable an implementation of suitable proactive activities and/or adjustment of the air ventilation to avoid or at least reduce the risk of mould growth etc.

The method according to example embodiments can be used to e.g. monitor the indoor environment, detect and remedy failures and/or deficiencies in the ventilation system and in the indoor environment and/or identify resident units or apartments having unusually high level of humidity. The method according to example embodiments further provides a possibility to associate ventilation rate in buildings to relevant national standards. Another possibility with the method is to replace existing compulsory ventilation inspections. In addition, the method contributes to better understand how failures within the ventilation system can cause imbalances in the heat supply of the building.

Furthermore, the method according to example embodiments can be used in order to determine if a high level of humidity in the indoor environment is caused by the behaviour of the individuals living in the indoor environment. As an example, the method according to example embodiments can be used in order to determine whether a high level of humidity in the indoor environment is caused by the behaviour of the individuals living in the indoor environment or by a deficiency of the ventilation system.

In addition, the method according to example embodiments can be used for adjusting a ventilation rate of a ventilation system for an indoor environment based on the determined ventilation rate. For instance, the determined ventilation rate can be used as input to mechanical ventilation system, such as ventilation system including a fan. In this type of mechanical ventilation systems, the fan rate or fan effect can be reduced based on the value of the determined ventilation rate in order to ensure that the mechanical ventilation system is operating at an appropriate speed. Although the mechanical ventilation system may sometimes operate at a low ventilation rate, it has also been observed that the ventilation rate may be inappropriately high, for instance during winter season. This is particularly devastating for the comfort level in the indoor environment since the ventilation system is set to replace the interior air with cold outside air. That is, the warmer air has a lower density than the cool air, and thus creates upward convective flows known as thermal plumes. Accordingly, during winter season, a ventilation system set to replace the indoor air with cold outside air at a high rate, high ventilation rate, may cause the temperature in the indoor environment to fall below the comfort level. The increased ventilation rate during winter season is typically driven by a difference between the outdoor temperature and the indoor temperature. In addition, an increased ventilation rate typically results in a higher consumption of power. It is thus desirable to monitor the ventilation rate in order to adjust the ventilation rate of a ventilation system for an indoor environment to maintain the temperature in the indoor environment at a comfort level.

The method according to example embodiments further provides a possibility to associate ventilation rate for indoor environments, such as buildings, to relevant national standards. As mentioned above, another possibility with the method according to example embodiments is to replace existing compulsory ventilation inspections. In addition, the method according to example embodiments provides a means for understanding how failures within the ventilation system can cause imbalances in the heat supply of the building.

The term "humidity point load" herein refers to a point in time with a temporary increased high level of humidity. Hence, a humidity point load is a reflection of the humidity level in the indoor environment as measured by a sensor module for a given point of time. The extension of the humidity point load in time is typically shorter than the time range between two measurements of the humidity level in the indoor environment, as measured by the sensor module. To this end, a humidity point load corresponds to an occasion in time when the indoor environment is subjected to a temporary increase of the level of humidity (for a given point of time), which is different to a permanent increase of the level of humidity over a substantial time period or a temporary increase of the level of humidity over a substantial time period. The extension of the humidity point load in time typically is between 0.2h - 3h depending on the underlying reason for the temporary increased high level of humidity. As an example, in a situation when a resident is visited by several people, the humidity level in the indoor environment typically increases slowly for several hours, thus typically corresponding to an extension of the humidity point load around 2h - 3h. However, if the level of humidity is temporary increased due to e.g. cooking, the extension of the humidity point load is shorter, and typically around 0.5h - 1h. Thus, in some examples/situations, the extension of the humidity point load in time typically may vary between 0.2h - 3h. However, the extension of the humidity point load in time usually is between around 0.5h - 1h. Thus, it is to be noted that the characteristics and the extension of the humidity point load is to be distinguished from the characteristics and extension of a long-lasting increase of the humidity level (or permanent level of high humidity).

Further, a humidity point load may, in some example embodiments, refer to an increase in relative humidity equal to or above 4 percentage units (corresponding to 4% rH/h) under a period of time of 0.2h - 3h. Still preferably, a humidity point load may sometimes refer to an increase in relative humidity equal to or above 4 percentage units (corresponding to 4% rH/h) under a period of time of 0.5h - 1h.

By the provision that the ventilation rate is determined based on a dilution characteristic of the measured humidity levels following said point load, it becomes possible to determine the ventilation rate in the indoor environment at a point of time after an identified temporary increase of the humidity level (i.e. humidity point load) to discern whether the humidity climate in the indoor environment will drop down to normal humidity levels (normal level of vapour concentration) or if the humidity climate may possibly be associated with a malfunction of the ventilation system, over or under ventilation of the indoor environment and/or an unhealthy indoor environment climate.

To this end, as the method of the example embodiments may e.g. be used for estimating whether the humidity climate in the indoor environment will drop down to normal humidity levels after an identified temporary increase of the humidity level (i.e. humidity point load), the humidity point load is initially identified in order to know when the step of determining the ventilation rate as mentioned above should be performed by the method.

The term "dilution characteristics" relates to the dilution of humidity existing in the air. Thus the term "dilution characteristics" herein typically refers to that the dilution of humidity, or more specifically the dilution of vapour concentration existing in the air, follows a dilution process. Accordingly, the determination of the ventilation rate is based on the dilution of vapour concentration (humidity) existing in the air.

The term dilution process herein typically refers to the process of decreasing a vapour concentration existing in the air in the indoor environment to a lower vapour concentration, typically corresponding to a normal level of vapour concentration. This type of dilution process occurs continuously via ventilation of the indoor environment so that the inflow of fresh air (outdoor air) and the outflow of indoor air are equal. In this context, it should be readily appreciated that the dilution process occurring in an indoor environment typically refers to that the ventilation of air in the indoor environment is based on mixed ventilation, which is the conventional type of ventilation in indoor environment. In one example embodiment, the dilution process can be defined by the dilution process formula as further described herein. In other words, it is to be noted that a dilution process occurs continuously via ventilation of the indoor environment so that the inflow of fresh air (outdoor air) and the outflow of indoor air is equal. In this context, the dilution process occurring in an indoor environment refers to that the ventilation of air in the indoor environment is based on mixed ventilation. This is a common assumption within an indoor environment and means that no humidity gradients occur within said environment. As the level of humidity in the indoor air always is higher than the level of humidity in the outdoor air (corresponding to the added fresh air in the indoor environment), the inflow of the fresh outdoor air will dilute the humidity in the indoor air. That is, the number of water molecules per unit is lower in the intake air (inflow of fresh air) than in the extract air (outflow of indoor air). The extract air contains the same level of humidity as the indoor environment because total mixed ventilation is assumed.

It should be conceivable that the dilution process of evaporating a liquid (humidity or vapour) from a ventilated indoor environment may be derived from mass balances as is well-known to the skilled person in the art.

Typically, the step of identifying a humidity point load of increased level of humidity in the indoor environment based on the gathered indoor environmental data is continued until a plurality of humidity point loads are identified. By identifying a plurality of humidity point loads, the method can subsequently determine the ventilation based on a plurality of humidity point loads, which will further reduce the risk of having a biased input to the step of determining the ventilation rate based on a dilution characteristic of the measured humidity levels following said point load. In other words, the step of determining the ventilation rate can be based on several essentially independent analyses of the environmental indoor data which improves the probability of having an unbiased input to the step of determining the ventilation rate.

Typically, wherein, when a humidity point load is identified, the method is configured to determine the level of average humidity before the humidity point load. Typically, the determined level of the average humidity before the humidity point load can be used in order to determine the ventilation rate by the dilution process formula/characteristic.

As an example, the level of average humidity is determined for a period of three backward lying hours prior to the identified humidity point load. It should be conceivable that three backward lying hours is merely one example of a time range, and that other example are possible depending on the ultimate implementation of the method and the indoor environment etc. Further, the level of average humidity is determined by computing the average level of humidity in a series of humidity points. Thus the computing of the level of average humidity value is derivable from the gathered environmental data which comprises a value on the humidity level for each point in time.

In one example embodiment, the ventilation rate is determined by the dilution process formula:

$$Q = \frac{V \cdot \ln \dfrac{(H_p - H_a)}{(H_b - H_a)}}{t_b - t_p}$$

Wherein:

Q = Ventilation rate
V = Air volume of the indoor environment [m$^3$]
$H_p$ = Humidity at a humidity peak point
$H_a$ = Average humidity before the humidity point load
$H_b$ = Humidity at an arbitrary time after the humidity peak point
$T_b$ = Time where $H_b$ is measured
$T_p$ = Time at the humidity peak point

In this example embodiment, it should be conceivable that the air volume of the indoor environment may be obtained from estimations or predetermined standard values, the humidity at a humidity peak point may typically be obtained from the gathered environmental data (i.e. measured values), the humidity at the humidity point load may typically be obtained from the gathered environmental data (i.e. measured values), the average humidity before point load may be obtained from the gathered environmental data (i.e. measured values), the humidity at an arbitrary time after the humidity peak point may be obtained from the gathered environmental data (i.e. measured values), e.g. a value of the humidity level as measured three hours after the humidity peak point, while the time where $H_b$ is measured and the time of the humidity peak point may be obtained from the gathered environmental data.

In this context, the term "humidity peak point" refers to the maximum level of the humidity. Further, in this context, the term "humidity point load" refers to contribution of humidity between the point Ha and the point Hp, i.e. the temporary increase in humidity as determined by the difference in humidity between the average humidity before the humidity point load and the humidity at the humidity peak point.

Typically, although not strictly required, the step of identifying a humidity point load may further comprise the steps of:

- allocating the gathered indoor environmental data as a function of time, thereby forming a data set containing a range of humidity level points for a given time frame,
- detecting a humidity turning point in the humidity level in the indoor environment from said range of humidity level points,

- whereby, if a humidity turning point is detected, the step is determining the level of humidity in a humidity level point before the humidity turning point, and
- determining the level of humidity in a plurality of humidity level points following the humidity turning point,
- wherein a humidity point load is established if the level of humidity in the humidity level point before the humidity turning point is lower than the level of humidity in the humidity turning point and the level of humidity in a plurality of humidity level points following the humidity turning point indicates a decrease in the level of humidity corresponding to a dilution process.

In this context of the present invention, the term "humidity turning point" typically refers to a point in time when the level of the humidity is higher than the level of humidity for a point preceding the humidity turning point, and also higher than the level of humidity for a point following the humidity turning point. In other words, the humidity turning point refers to a point where the derivative of the point, as function of time, is equal to zero.

In one example embodiment, the step of identifying a humidity point load may comprise the steps of:

- allocating the gathered indoor environmental data as a function of time, thereby forming a data set containing a range of humidity level points for a given time frame,
- determining a value of the derivative for a humidity level point in the data set,
- detecting a humidity turning point in the humidity level in the indoor environment based on the value of the derivative of a humidity level point, wherein the humidity turning point corresponds to a derivative being equal to zero,
- whereby, if a humidity turning point is detected, said step is determining a gradient value of a humidity level point before the humidity turning point and at least three gradient values on three humidity level points following the humidity turning point,
- wherein a humidity point load is ascertain if the gradient value of the humidity level point before the humidity turning point is positive and above a threshold value and the at least three gradient values on the three humidity level points following the humidity turning point are negative.

In this context of the present invention, if relative humidity is measured in %-humidity, the threshold value of the gradient value may be set to e.g. 3, 4 , 5, 8 or the like. That is, the threshold value corresponds to the constant in a linear equation (the slope of the curve or the gradient).

Typically, the threshold value refers to an increase in the humidity level in the indoor environment before the humidity turning point. Thus, the threshold value is typically an indication of an increase in the humidity level in the indoor environment.

As an example, the threshold value may be set so that a humidity point load is identified if the value of the humidity level point before the humidity turning point amounts to an increase in relative humidity above 4% rH/h. In other words, in this example embodiment, the method only identifies a humidity point load if the increase in relative humidity in the indoor environment is above 4% rH/h for a humidity level point before the humidity turning point.

Also, the provision that at least three gradient values on three humidity level points following the humidity turning point are negative typically refers to an indication that a decrease in the level of humidity corresponds to a dilution process.

The step of detecting a humidity turning point in the humidity level in the indoor environment based on the value of the derivative of a humidity level point typically means that the method is searching for the peak of the humidity level (humidity turning point) in the relevant time frame.

The step of determining a gradient value of a humidity level point before the humidity turning point and at least three gradient values on humidity level points following the humidity turning point, typically means that the method is analysing the level of humidity before the humidity turning point and analysing the level of humidity for a set of humidity level points (over a time range) following the humidity turning point to ascertain when, or if, the level of humidity in the indoor environment has reached a normal level of humidity corresponding to a dilution process.

To this end, the method is configured to determine the humidity level in each point before the humidity turning point. In addition, the method is configured to determine the humidity level in each point after the humidity turning point in order to determine whether the decrease in the humidity after the humidity turning point follows the characteristics of a dilution process, as defined herein.

In other words, when the humidity turning point is found, the method proceed to detect a point indicative of a decrease in the level of humidity compared to the turning point, both with respect to a point immediately before the humidity turning point, but also with respect to a plurality of points immediately following the humidity turning point.

In the event that the method determines that the level of humidity for a set of humidity level points (over a time range) following the humidity turning point does not follow a normal decrease in level of humidity corresponding to a dilution process, further analysis of the environmental data and the determination of the ventilation rate may be cancelled for this specific set of data.

Optionally, although strictly not necessary, the step of identifying a humidity point load may be followed by outputting a time series identifying where the point load occurs in the time series. In an example embodiment when the step of identifying a humidity point load may include an identification of a plurality of humidity point loads, the step is typically followed by outputting a time series identifying where each point load of the plurality of the point loads occur in the time series. That is, the step of identifying a plurality of humidity point loads in the indoor environment may typically further include the step of generating an overview of the plurality of identified humidity point loads representing a time series on when humidity point loads has occurred. This step of the method may typically be implemented in order to facilitate the progress of the humidity levels in the indoor environment, however, it should be appreciated that this step is only optional and not strictly required.

In one example embodiment, the method further comprises the step of estimating if the determined ventilation rate is an indication of a deficiency of the ventilation system or the like.

In one example embodiment, the method further comprises the step of estimating if the determined ventilation rate is within a reference value. The reference value may correspond to standards for the indoor environment. In this context, it should be readily conceivable that the reference value may be different for different indoor environments and may further depend on the conditions of the building, the age of the buildings, prevailing legislations or the like.

However, as exact values for ventilation rates may vary for different indoor environments and for different buildings and areas due to weather etc, it is difficult, sometimes even impossible, to determine exact reference values on ventilation rates. Thus, it should be conceivable that the ultimate ventilation rate reference may typically be set based on research, field experiments occupant preferences, experience or standard values.

In one example embodiment, the method further comprises the step of determining if a ventilation system is operated at an appropriate level based on the determined ventilation rate. As an example, if the determined ventilation rate is considered to be significantly higher than a reference value of the ventilation rate of the ventilation system, this may indicate that the ventilation system is set to ventilate at higher ventilation grade than required to maintain a suitable indoor environmental comfort level.

In one example embodiment, the gathering of indoor environmental data is performed continuously to provide a plurality of humidity values representing the humidity in the indoor environment over a given time range. As an example, the gathering of indoor environmental data is performed at least every hour, or more frequently. In one example, the gathering of indoor environmental data is performed every 15 minutes.

In one example embodiment, the indoor environmental data further comprising a value on the temperature level in the indoor environment. In other words, the indoor environmental data further comprising a value on the temperature level in the indoor environment reflecting the temperature level in the indoor environment as a function of time. In this manner, it becomes possible to obtain an indication of the temperature in the indoor environment for a given time. By further gathering the temperature levels, beside the levels of humidity, it becomes possible to determine the absolute humidity levels. Hence, in this example embodiment, it becomes possible to provide constant hourly temperature and relative humidity values in order to enable that the absolute humidity level is determined based on the relative humidity and the temperature. By also measuring and gathering information about the temperature, thus allowing the method to determine and use the absolute humidity as an input to the step of identifying a humidity point load in the indoor environment based on the gathered indoor environmental data, it becomes possible to further improve the accuracy of the method. In addition, it becomes possible to implement and use the method in environments characterized by a high fluctuation in temperature.

It should be readily appreciated that when the method according to example embodiments is configured to only identify the humidity point load based on the relative humidity levels, the method may typically be configured to presume that the temperature is relatively stable over time.

Typically, the step of identifying a humidity point load of increased level of humidity in the indoor environment based on the gathered indoor environmental data is continued until a plurality of humidity point loads are identified. According to one example embodiment, the step of identifying a humidity point load in the indoor environment is continued until at least a plurality of discrete humidity point loads are identified.

Typically, although not strictly required, the step of identifying a plurality of humidity point loads in the indoor environment based on the gathered indoor environmental data is performed on a continuous basis. In this manner, it can be ensured that a substantial part of humidity point loads are identified in order to provide a reliable result.

In one example embodiment, the step of identifying a plurality of humidity point loads in the indoor environment is performed from a location remote from the indoor environment. In this manner, it becomes possible to make use of simple sensor modules, while having all relevant software relating to computing etc. in the remote processing unit. In addition, if the remote processing unit is combined with communication means, it becomes possible to directly communicate with the end-users of the method via e.g. web portal.

The indoor environmental data is typically transmitted to an external server via the mobile network (wireless) or via radio frequency.

The present invention further relates to a method for recording climate changes over time in the indoor environment including the steps of the method according to the first aspect and/or example embodiments as mentioned above with respect to the first aspect of the invention and the step of recording climate changes over time in said indoor environment based on said determined ventilation rate.

The present invention further relates to a method for detecting ventilation deficiencies in the indoor environment including the steps of the method according to the first aspect and/or example embodiments as mentioned above with respect to the first aspect of the invention and the step of detecting a ventilation deficiency in the indoor environment based on said determined ventilation rate.

The present invention also relates to a method for identifying resident units or apartments having high level of humidity, in which the method includes the steps of the method according to the first aspect and/or example embodiments as mentioned above with respect to the first aspect of the invention and the step of identifying resident units or apartments having a high level of humidity based on said determined ventilation rate.

Typically, the processing unit may refer to a processing circuitry, a control unit, control system, central control system, remote control unit or the like, and/or may include a microprocessor, microcontroller, programmable digital signal processor or another programmable device. The processing unit may also, or instead, include an application specific integrated circuit, a programmable gate array or programmable array logic, a programmable logic device, or a digital signal processor. Where the processing unit includes a programmable device such as the microprocessor, microcontroller or programmable digital signal processor mentioned above, the processor may further include computer executable code that controls operation of the programmable device.

As mentioned above, the processing unit is typically configured to receive the gathered environmental data from the sensor module(s) and further configured to perform the steps of the method according to any one of the example embodiments described herein.

Optimally, although not strictly necessary, the processing unit may also be configured to control the ventilation system in the indoor environment.

Typically, the processing unit is configured to perform the method steps of the method as mentioned above.

Typically, the processing unit is located remote from the indoor environment. In other words, the processing unit is configured to receive the gathered indoor environmental data by means of a wireless connection. Alternatively, the processing unit is located remote from the indoor environment and configured to receive the gathered indoor environmental data by means of a cable.

According to a second aspect, the object is achieved by a processing unit according to independent claim 20. Thus, according to the second aspect, there is provided a processing unit configured for implementing a method according to the first aspect and/or any one of the example embodiments as mentioned above. Further effects of this second aspect are largely analogous to those described above in relation to the first aspect.

Further features of, and advantages with, example embodiments of the present invention will become apparent when studying the appended claims and the following description. The skilled person realize that different features of the present invention may be combined to create embodiments other than those described in the following, without departing from the scope of the present invention.

BRIEF DESCRIPTION OF THE DRAWINGS

The various example embodiments, including its particular features and example advantages, will be readily understood from the following illustrative and nonlimiting detailed description and the accompanying drawings, in which:

> Fig. 1a schematically illustrates a ventilation system arranged in an indoor environment and a processing unit, which are used by a method according to an example embodiment of the present invention;
> Fig. 2a is a graphic representation of a method for determining ventilation rate within an indoor environment according to an example embodiment of the present invention;
> Fig. 2b is a graphic representation of further details of the method for determining ventilation rate within an indoor environment according to the example embodiment in fig. 2a;
> Fig. 2c is a graphic representation of further details of the method for determining ventilation rate within an indoor environment according to the example embodiment in fig. 2a - 2b;
> Figs. 2d - 2g are graphic representations of various implementations of a method for determining ventilation rate within an indoor environment according to the example embodiment of the present invention as described in relation to figs. 2a - 2c;
> Fig. 3 is a graphic representation of humidity levels as a function of time within an indoor environment showing how the humidity is varied over time in an apartment.

DETAILED DESCRIPTION

The drawings are not necessarily to scale and certain features may be exaggerated in order to better illustrate and explain the exemplary embodiments of the present invention.

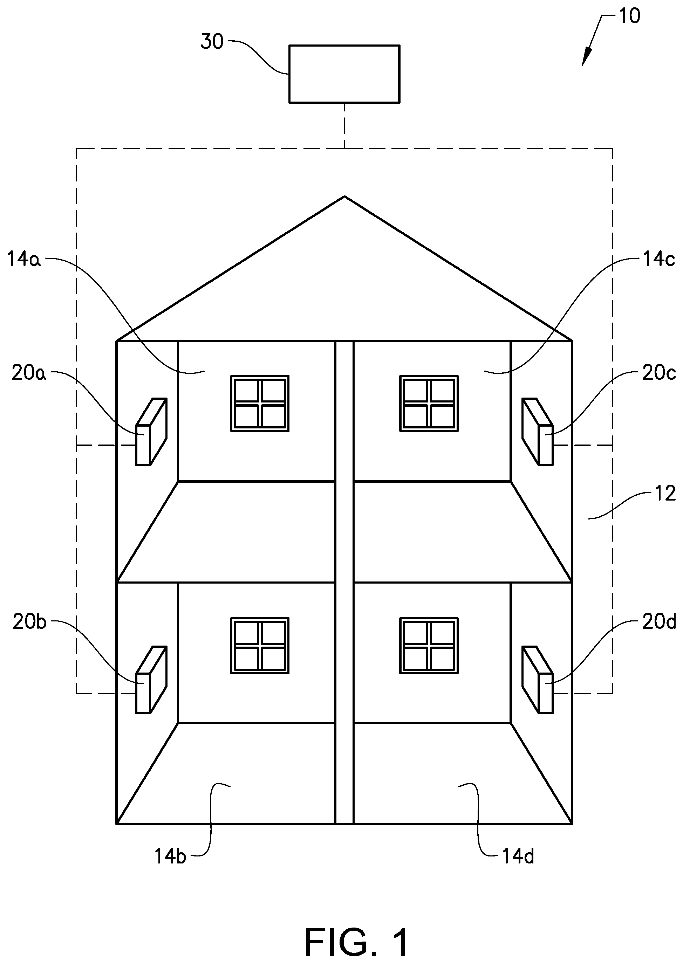

Referring now to the figures and Fig. 1 in particular, there is depicted an exemplary embodiment of a sensor system 10, typically comprising a plurality of sensor modules 20a - 20n, arranged in an indoor environment 12 and further connected to a processing unit 30. In this manner, there is provided a system for determining a ventilation rate comprising a processing unit and a sensor system, wherein the sensor system here comprises a plurality of sensor modules. However, it should be readily appreciated that the sensor system may only include one sensor module. Thus, it should be noted that the system for determining a ventilation rate may comprise a processing unit and one sensor module.

The arrangement of the sensor system 10 comprising the sensor module(s) 20a - 20n in Fig. 1 can be considered as one example of a standard set up of a plurality of sensor modules, but it should be conceivable that the type of sensors and the arrangement of the sensors within the indoor environment may be different for different buildings and apartments. In one example embodiment, only one sensor module 20a may be installed to operate with the processing unit 30.

In general, the indoor environment 12 herein refers to an indoor environment such as apartments, housing co-operations, buildings, older buildings, museums, historical buildings or the like.

Turning now to fig. 1, there is provided an indoor environment 12 in the form of a plurality of apartments 14a -14d located in a building. It is to be noted that fig. 1 may also represent an indoor environment in the form of a plurality of rooms located in one single apartment or building.

In each room or apartment, there is provided at least one sensor module 20a - 20n. as shown in fig. 1, the system 10 here comprises a set of four sensor modules 20a - 20d arranged in four single apartments (or four room), respectively.

Typically, the sensor module may include either a humidity sensor or a sensor configured to measure both humidity and temperature. In addition, in some example embodiments, the sensor module may include a separate humidity sensor and a separate temperature sensor. Alternatively, a sensor system may be provided including a separate humidity sensor (module) and a separate temperature sensor (module).

Humidity sensors are particularly useful in bathrooms or kitchens where large amounts of moisture can be created during baths/showers or during cooking or the like.

It should be readily understood that the term "sensor module", as will be used herein, may refer to a sensor module including any one of a humidity sensor, a combination of a humidity sensor and a temperature sensor or a sensor configured for measuring both humidity or temperature. In addition, when the sensor module is configured for measuring humidity, the description herein typically refers to measuring relative humidity. However, for the sake of simplicity, the description to follow may sometimes denote a sensor module simply as a sensor.

The indoor environment 12 or the system 10 may further include a ventilation device (although not shown), such as a fan or the like. One type of ventilation devices may include a humidity sensing fan configured to switch on or increase the ventilation rate based on a rise of the humidity level above a threshold level. In addition, or alternatively, the ventilation device may be configured to switch off when the humidity level drops down below a threshold level. It should be conceivable that this type of ventilation device is well-known, and thus not further described in detail.

A humidity sensor is typically configured to measure relative humidity, which is a measure of the partial pressure of water vapour in the air as a percentage of the saturated water vapour pressure. The relative humidity of air may often change depending on the weather, and on other systems such as air conditioning systems configured for removing moisture from the indoor air. As mentioned above, the moisture may be generated during baths/showers or during cooking or the like. Typically, the relative humidity may also depend on level of temperature in the indoor environment.

Accordingly, the level of relative humidity often varies greatly with time, and generally between 30-80 % rH. Humidity levels above 70 % rH are generally an indication on that the indoor environment is subjected to a humidity generating event such as a bath, shower, cooking, washing-up, wiping floors with water or the like. However, it should be readily appreciated that the above values are only to be considered as examples, and the level of humidity often varies greatly depending on type of indoor activity and outdoor climate.

The gathering of environmental data from the sensors or sensor module may be controlled by a processing unit, control system or the like. The processing unit may in some example embodiments be the same as the processing unit 30 configured for performing the method according to example embodiments herein. Alternatively, the processing unit configured for controlling the sensor system, the sensor module(s) or the sensor may be another independent processing unit. Thereby, the processing unit 30 here is configured to control the sensor system 15 including one or several sensor modules 20a, 20b, 20c to 20n. Typically, the processing unit comprises a computer program product. The computer program product may include a computer readable medium having stored thereon computer program means for causing the processing unit to control the monitoring system. Moreover, the computer program product comprises code for executing a method according to any one of the example embodiments as described hereinafter.

As mentioned above, each sensor module 20a - 20n is connected to the processing unit 30, sometimes simply denoted as the processing means or control unit. The processing unit is thus configured to receive and process environmental data from the sensor modules. In other words, each sensor module is typically connected to a processing unit adapted to gather environmental data from the sensor module(s).

The processing unit 30 is typically located essentially remote from the sensor modules and external from the indoor environment.

However, it should be conceivable that the processing unit may also be located within indoor environment. In addition, or alternatively, the processing unit may also be located adjacent to the sensor modules as long as the function of the method according to example embodiments is not compromised.

In addition, or alternatively, the processing unit may be located at a distance or may be connected to the sensor module(s) by a network.

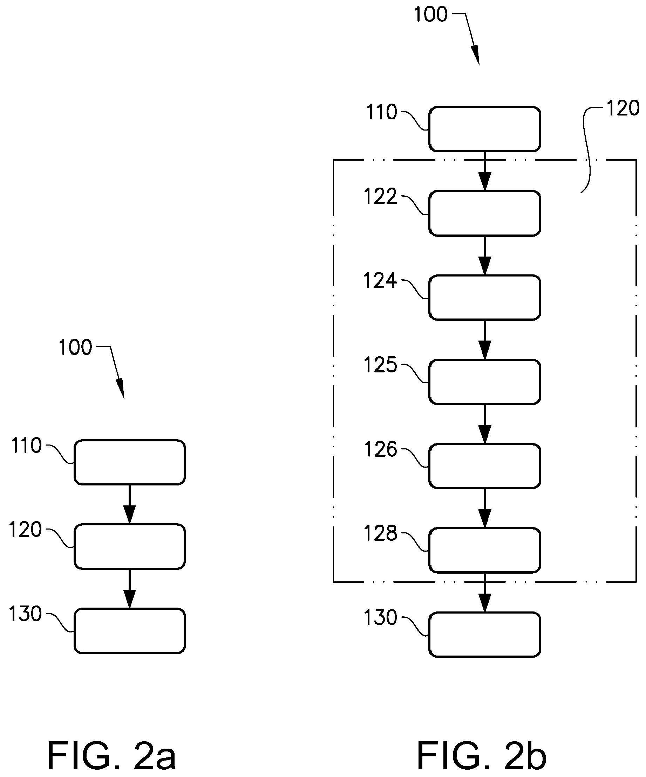

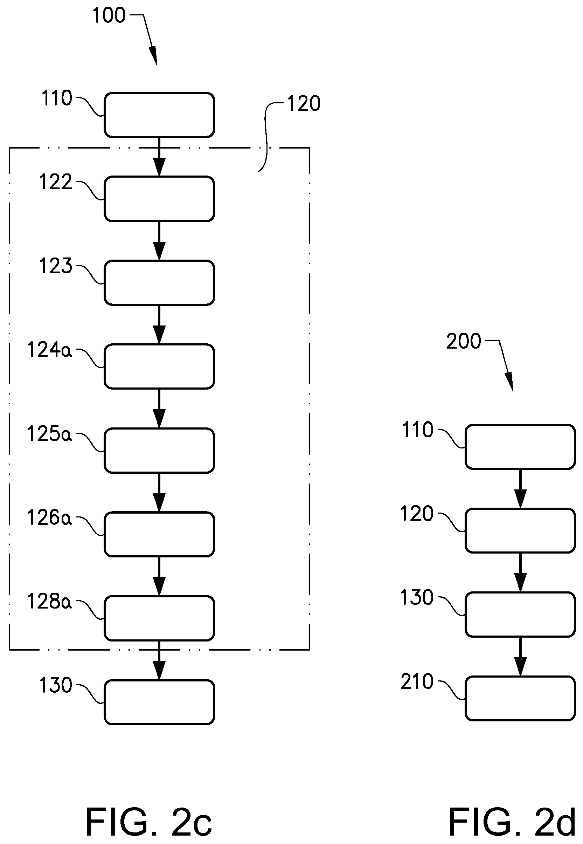

In the example embodiments as described in relation to fig. 1 and fig. 2a - 2c, and in other example embodiments e.g. as described in relation to figs. 2d - 2g, the sensor module 20a is connected to the processing unit via a wireless connection such as a wireless mBUS. One example of a wireless mBUS is wireless mBUS 868MHz, S mode. However, it should be readily appreciated that the sensor module may be connected to the processing unit by means of radio frequency or any other connection capable of transmitting the gathered indoor environmental data to the processing unit. By using a connection that is based on the wireless technology or radio frequency, the processing unit can be located remote from the sensor module(s) in a simple and efficient manner, while ensuring a safe and quick transmittance of indoor environmental data from the sensor module to the processing unit. In addition, by a using a wireless technology or radio frequency, it becomes possible to configure the system and method for remote measurements in sensitive or difficult to reach places.

In some example embodiments, the sensor module may even be connected to the processing unit by a cable.

The sensor or sensor module may typically include or be connected to a short term memory, in which the environmental data are stored a predetermined time period, for instance 15 minutes or the like. The sensor module is typically configured to measure indoor environmental data over time. As an example, the sensor module is configured to measure indoor environmental data over a time of 15 minutes.

Thus, the sensor module is configured to measure relative humidity over time. Typically, the sensor module is configured to measure relative humidity over a time of 15 minutes. Further, the sensor module may also be configured to measure relative humidity and temperature over time. As an example, the sensor module may be configured to measure relative humidity and temperature over a time of 15 minutes. In addition, or alternatively, the system may include a separate sensor module configured for measuring relative humidity over time and another sensor module configured for measuring temperature over time. Thus, in some example embodiments, the system may further include an individual sensor module configured for measuring temperature over time.

By using a sensor module, or separate sensor modules, configured for measuring relative humidity and temperature over time, it becomes possible to determine the absolute humidity based on the relative humidity and the temperature. It should be readily appreciated that determining absolute humidity based on the relative humidity and temperature are well-known in the art, and thus not further described herein.

In addition, the example of measuring indoor environmental data over a time of 15 minutes is only one example of many possible time intervals. In some example embodiments, the measuring time may be adjusted depending on the configuration of the system and the method, and the relevant indoor environment. Hence, in some example embodiments, the time may be set to 30 minutes, 1h, 2h or the like.

It should be readily appreciated that all sensor modules are typically connected to one processing unit. However, the processing unit may include several sub-units, so that each sub-unit is connected to one single sensor module. The sub-units can then communicate with a primary processing unit, a central processing unit, or the like.

The sensor module(s) 20a - 20n are here arranged on interior walls, hallways or the like. Thus, it should be readily appreciated that the sensor modules are arranged in the indoor environment, and thus not being arranged outdoor, i.e. on outer walls of the buildings.

Optimal, although not strictly required, the sensor module(s) 20a - 20n are arranged at a distance of about 160 - 180 cm above floor surface in order to gather indoor environmental data in a reliable manner. However, the sensor module(s) may sometimes be arranged or placed on a different distance from the floor level, or in another location as long as reliable indoor environmental data can be gathered by the module(s) in order to perform the steps of the method, as described herein.

It should be understood, however, that the sensor module(s) should at least be arranged at an appropriate distance from any heating/cooling sources, i.e. solar radiation, lamps, pipes or extensive airflow etc. so as to ensure that reliable measurements can be gathered on a continuous basis.

The sensor module(s) can be attached to the indoor environment, such as a interior wall, by means of adhesive or screws.

In addition, the sensor module(s) may also include a power sources such as a battery or the like.

Typically, although not strictly necessary, each sensor module may be configured to measure relative humidity over relative humidity range between 5%rH - 95%rH.

In example embodiments when the sensor module(s) is further configured to measure temperature, the sensor module(s) may generally be adapted to measure temperatures over a temperature range between 0 degrees Celsius to 50 degrees Celsius.

Hence, as described above, each sensor module is here configured to gather indoor environmental data and transmit the data to the processing unit for further processing. Typically, although strictly not necessary, each sensor module is configured to gather indoor environmental data, store the indoor environmental data for a given time and then transmit the data to the processing unit for further processing. As mentioned herein, in one example embodiment, each sensor module is configured to gather indoor environmental data, store the indoor environmental data for a time of 15 minutes, and then transmit the data to the processing unit for further processing.

Without being bound by any theory, the level of moisture content or humidity in an indoor environment space such as an apartment is dependent on three factors: (1) The moisture content of the fresh air introduced into the indoor space via the air/ventilation flow. (2) Indoor internal loads such as cooking activities, use of warm water, laundering /drying of clothes and human activities. This type of loads contributes to an increased level of moisture content typically corresponding to a point load for a given time. (3) Air turnover (change of air), i.e. replacement of interior air with outside air.

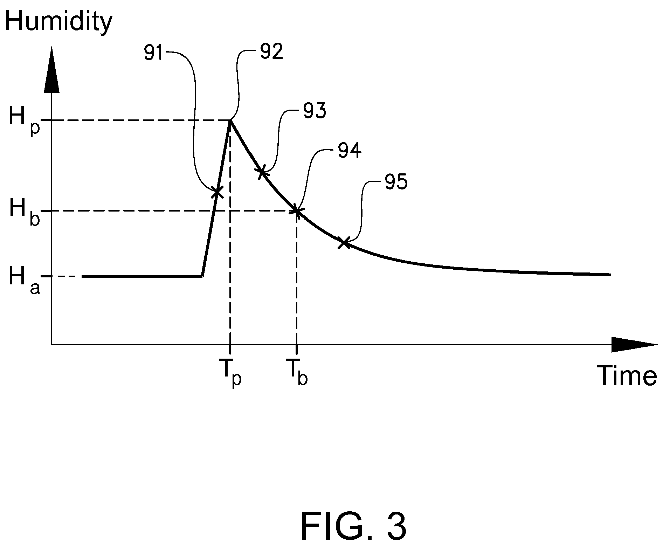

Fig. 3 is a graphic representation of humidity levels as a function of time within an indoor environment showing how the humidity may be varied over time in one apartment.

The unbroken line indicates the relative humidity level H as a function of time T. Thus, in this flow diagram, the gathered indoor environmental data, as measured by the sensor module(s) is indicated in the form of levels of the humidity as measured by the sensor module with respect to time.

As illustrated in fig. 3, a humidity turning point 92 of the humidity level occurs at point Tp. At this point, Tp, the level of the humidity peaks for the given time range and then typically drops back towards normal humidity levels or ambient humidity levels. As an example, the time for a drop in humidity from the humidity peak point to a normal level of humidity may be about 3 h, provided that normal ventilation is present. As mentioned above, a peak of the humidity level at a certain point typically arises due to an indoor internal load such as cooking activities, use of warm water, laundering /drying of clothes, human activities. This type of load contributes to an increased level of moisture content typically corresponding to a temporarily increase of the humidity for a given time, i.e. a humidity point load for a given time.

Accordingly, on the left hand of fig. 3, i.e. on the left hand of the peak of the humidity level 92, the humidity levels before the peak of the humidity are shown, while on the right hand of fig. 3, i.e. on the right hand of the peak of the humidity level 92, the humidity levels after the peak of the humidity are shown. In Fig. 3, some of the humidity levels before the peak of the humidity are here represented by reference Ha, which refers to the average humidity level before the peak of the humidity level. As an example, the level of the average humidity can be represented by humidity levels determined for a period of three backward lying hours before the peak of the humidity level (humidity turning point). It should be conceivable that three backward lying hours is merely one example of a time range, and that other example are possible depending on the indoor environment etc.

The sharp inclined part of the curve, denoted e.g. by point 91, here represents the humidity point load, as further described herein.

Furthermore, reference Hb herein refers to a humidity level at an arbitrary time Tb after the peak of the humidity level 92.

As mentioned above, data on the humidity levels are typically obtained from the gathered indoor environmental data. Thus, the humidity levels in fig. 3 are reflections on the humidity levels in the indoor environment 12 under the given time range. In this manner, the humidity levels are measured values. However, it should be conceivable that some input to the example embodiments as described herein may further be determined by additional calculations. For instance, the value of the average humidity level before the humidity turning point 92 may be obtained from a plurality of gathered environmental data (i.e. measured values) and further calculated so as to define an average humidity level for a certain time period. In addition, the humidity level Hb at an arbitrary time Tb after the peak of the humidity level 92 is typically represented by a value of the humidity level as measured a certain time after the humidity turning point. As an example, the arbitrary time Tb when said humidity level is measured may correspond to a time of three hours after the humidity turning point.

Further, as may be gleaned from fig. 3, the humidity turning point 92 is characterized by that the level of the humidity is higher than the level of humidity for a point preceding the humidity turning point and also higher than the level of humidity for a point following the humidity turning point. Thus, the humidity turning point refers to a point when the level of humidity peaks from a lower level of humidity, and then drops back down towards a lower humidity level (often corresponding to a normal level of humidity or the ambient humidity level). At this point 92, the derivative of the point, as a function of time, is equal to zero. In other words, the humidity turning point refers to a point where the derivative of the point, as function of time, is equal to zero. Hence, the term "humidity turning point" here typically refers to a point in time when the level of the humidity is higher than the level of humidity for a point preceding the humidity turning point, and also higher than the level of humidity for a point following the humidity turning point.

In order to confirm that a humidity point constitutes a humidity turning point, the method according to example embodiments initially determines that the derivative of the point, as a function of time, is equal to zero, and then typically also determine that the level of humidity at an arbitrary time Tb after the humidity point 92 essentially corresponds to a normal level of humidity or the ambient humidity level. In this manner the process is capable of dealing with irregularities and possible fluctuations in the measurements of the humidity level, e.g. due to that some sensor modules may have an inherent error marginal, the sensor modules. The arbitrary time Tb may typically be set based on working conditions, operational conditions and type of sensor module. As an example, the arbitrary time Tb can be set to e.g. a time of three hours.

Typically, the humidity turning point corresponds to a humidity peak point Hp, which is illustrated in fig. 3.

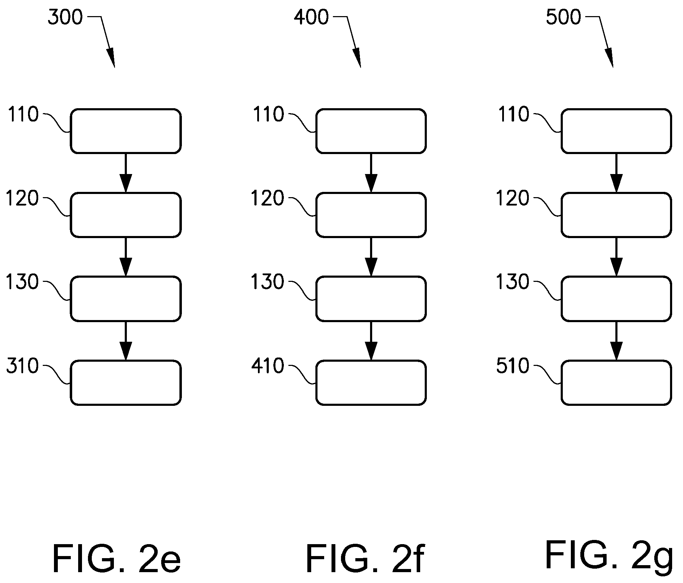

Further, the humidity point 91 here illustrates the humidity point load, as further described herein. In order to establish or identify a humidity point load, as defined herein, the method according to the example embodiments is configured to perform the operations of a method according to example embodiments, which are further described below with particular reference to fig. 2a and 2g. The purpose is to detect a humidity turning point and to establish the humidity level of a point before the humidity turning point and the level of humidity in a plurality of humidity level points following the humidity turning point. In this manner, it becomes possible to establish and identify whether the humidity point 91 is a humidity point load as defined herein. As illustrated in fig. 3, the humidity level point 91 before the humidity turning point is typically lower than the level of humidity in the humidity turning point 92, but higher than the average humidity in point $H_a$.

In this figure, the humidity point load is generally represented by the sharp inclination of the curve denoted by 91 which occurs due to that high amount of humidity is generated under a short period of time. Thus, the part of the curve is also here illustrated as straight inclined line.

Further, as shown in fig. 3, the level of humidity in a plurality of humidity level points 93, 94, 95 following the humidity turning point is lower than the level of humidity of the humidity turning point, which here indicates a decrease in the level of humidity corresponding to a dilution process, i.e. indicates a decrease in the level of humidity corresponding to a process of decreasing a vapour concentration existing in the air in the indoor environment to a lower vapour concentration, typically corresponding to a normal level of vapour concentration.

As may further be gleaned from fig. 3, the humidity level point 91 before the humidity turning point is here characterized by that the gradient value of the humidity level point 91 before the humidity turning point is positive. In addition, the humidity level points 93, 94, 95 following the humidity turning point are here characterized by that the gradients of the humidity level points 93, 94, 95 following the humidity turning point 92 are negative.

Besides this illustration of the humidity turning point 92, the gradient value of the humidity level point before the humidity turning point should be above a threshold value e.g. 2, 3, 4 or 5, as further described below.

It will be appreciated that the above graphical representation is only a schematically illustrated example of the distribution of humidity levels over time and the characteristics of a humidity point load, and that the visualization of the humidity point load may be different depending on the circumstances and the preferences. For example, the values of the humidity level and the visualization of the humidity point load may change depending on the indoor environment, type of activity in the indoor environment, type of sensors, time frame and the level of humidity rise in the indoor environment.

Turning now to Fig. 2a, there is depicted a graphic representation of a method for determining ventilation rate, as described herein, according to one example embodiment. The method according to various example embodiments provides the possibility to determine the ventilation rate in a cost-efficient and accurate manner, while monitoring the indoor environment. Hereby, it is also possible to quickly respond to any indications on deficiencies and/or problems with ventilation system and the indoor climate. Since the method is typically performed in a continuous manner, it is possible to respond even faster than conventional methods in the field.

In particular, the method according to example embodiments may allow for estimating whether the humidity levels in the indoor environment are reduced to an acceptable level in terms of health and comfort. In addition, the method according to example embodiments may allow for estimating whether the humidity levels in the indoor environment are low enough in order to maintain the building's integrity.

Typically, although not strictly required, the example embodiments provide a method capable of continuously measuring humidity levels in an indoor environment in order to determine the ventilation rate.

Accordingly, Fig. 2a shows a flowchart of the method 100 for determining ventilation rate within an indoor environment by means of a processing unit 30 and a sensor module 20a - 20n as illustrated in e.g. fig. 1. The method comprises the steps of:

- gathering 110 of indoor environmental data from the indoor environment by means of a sensor module, wherein the indoor environmental data comprises a value on the humidity level in the indoor environment,
- identifying 120 a humidity point load of increased level of humidity in the indoor environment based on the gathered indoor environmental data,
- determining 130 a ventilation rate based on a dilution characteristic of the measured humidity levels following the humidity point load.

Hereby, the ventilation rate is determined at a point of time after an identified humidity point load.

Typically, the indoor environmental data comprises a value on the relative humidity level in the indoor environment. As mentioned above, the sensor module may comprise a memory for storing the indoor environmental data. Thus, the step 110 may typically, although not strictly necessary, include the step of storing said indoor environmental data on a memory.

With regard to step 110, it is to be noted that in some example embodiments, the step of gathering of indoor environmental data is performed continuously to provide a plurality of humidity values representing the humidity in the indoor environment over a given time range. As an example, the gathering of indoor environmental data may be performed at least every 15 minutes. Alternatively, the gathering of indoor environmental data may be performed at least every hour, or the like. However, it is believed that for optimal results, the gathering of indoor environmental data should be continuously measured at least every hour or more frequently.

The time range of step 110 may be set to days, weeks, months or the like. However, it is also conceivable that step 110 is performed continuously (uninterrupted), while being configured to transmit the gathered indoor environmental data to the processing unit for further processing in sequences, e.g. in periods of 2 months. Other time periods are also conceivable depending on the installation and purpose of the example embodiments of the method.

Optimal, although not strictly required, step 110 is run on a continuous basis to gather and store indoor environmental data over a given time range. Subsequently, the indoor environmental data is transmitted to the processing unit at certain point for allocating the gathered indoor environmental data as a function of time, thereby forming a data set containing a range of humidity level points for a given time frame.

It should be readily appreciated that when the method according to example embodiments is configured to only identify the humidity point load based on the relative humidity levels, the method may typically be configured to presume that the temperature is relatively stable over time.

In one example embodiment, the indoor environmental data further comprising a value on the temperature level in the indoor environment. Each value of the temperature level typically corresponds to the temperature in the indoor environment at given time. Thus, the step of gathering indoor environmental data from the indoor environment by means of a sensor module 110, may, in this example embodiment, further comprise the step of gathering humidity level data (typically relative humidity level data) and temperature level data reflecting the humidity level and the temperature level in the indoor environment for a plurality of points of time. One advantage with measuring both relative humidity and temperature is that the method is capable of determining the absolute humidity level based on the relative humidity and the temperature.

In this way, the precision in the step of identifying the humidity point load and the step of determining the ventilation rate may be improved. In particular, it is believed that using both relative humidity and temperature to determine the absolute humidity, and using the absolute humidity as in input to the method provides more precise results for indoor environments characterized by rapidly changes in temperature during the observed time period.

It should be readily appreciated that when the description herein refers to indoor environmental data or environmental data, the term may refer to humidity level(s), temperature level(s) or both humidity level(s) and temperature level(s).

In addition, the method according to the example embodiments may be configured to gather indoor environment data from one area or several areas within the indoor environment. As an example, the method may be configured to gather indoor environment data from one apartment 14a. In addition, or alternatively, the method may be configured to gather indoor environment data from several apartments 14a - 14n.

In addition, or alternatively, the method may be configured to gather indoor environment data from one room of the apartment. In addition, or alternatively, the method may be configured to gather indoor environment data from several rooms of the apartment.

In addition, or alternatively, the method may be configured to gather indoor environment data from several floors of an apartment. In addition, or alternatively, the method may be configured to gather indoor environment data from several floors of a building.

In addition, or alternatively, the method may be configured to gather indoor environment data from one building. In addition, or alternatively, the method may be configured to gather indoor environment data from several buildings.

As mentioned above with respect to fig. 1, the indoor environmental data is gathered by a sensor module arranged in the indoor environment. Thus, the step of gathering of indoor environmental data from the indoor environment is here performed by the sensor module.

After the indoor environmental data has been gathered for a given time, the method is typically configured to transmit the data from the sensor module to a processing unit for further processing of the data according to the method steps described below. In this example embodiment, and in other example embodiments, the method is typically configured to transmit the data from the sensor module to a remote processing unit by a wireless mBUS. However, the sensor module may transmit the data to the processing unit in other ways, such as by radio frequency or via a cable.

When the environmental data is transmitted and stored in the processing unit, the method may further be operated to perform step 120. The execution of step 120 may be initiated by a user of the method and the system. In addition, or alternatively, the execution of step 120 may be initiated automatically by the processing unit, e.g. after a given time such on a monthly basis or upon request from the end-user.

Typically, the step of identifying a plurality of humidity point loads in the indoor environment is performed subsequent in time to the step of gathering the indoor environmental data.

In one example embodiment, the time interval between the step of gathering the indoor environmental data and the step of identifying a plurality of humidity point loads in the indoor environment is preferably several weeks, such as two weeks. Still preferably, in one example embodiment, the time interval between the step of gathering the indoor environmental data and the step of identifying a plurality of humidity point loads in the indoor environment may be several months, such as two months. Thus, it should be conceivable that the time between step 110 and step 120 may vary in time depending on the purpose and installation of the method according to example embodiments.

Typically, the step 120 of identifying a humidity point load of increased level of humidity in the indoor environment based on the gathered indoor environmental data is continued until a plurality of humidity point loads are identified. That is, the step of identifying a humidity point load in the indoor environment is typically, although not strictly required, continued until at least a plurality of discrete humidity point loads are identified. As an example, step 120 may be continued until at least a plurality of humidity point loads are identified, such as 3, 4, 5 or the like. It may even be possible that the step is continued until 10 - 50 humidity point loads are identified. In some example embodiments, it may even be possible that the step 120 is continued until 100 - 200 humidity point loads are identified, or even more. By identifying a plurality of humidity point loads, the method can subsequently determine the ventilation based on a plurality of humidity point loads, which will further reduce the risk of having a biased input to the step of determining the ventilation rate based on a dilution characteristic of the measured humidity levels following the humidity point load.

As mentioned above in relation to fig. 3, a humidity point load may herein reflect or represent a period of a temporarily high level of humidity in the indoor environment at a given point of time. Typically the extension of a humidity point load is between 0.5h - 1h. However, sometimes the extension of the humidity point load may be up 3 h if the increase in humidity is slowly increasing due to a certain indoor activity. An increase of the level of humidity above 3 h is however typically regarded as a long-lasting increase of the humidity or a permanent increase in humidity. To this end, a humidity point load corresponds to an occasion in time when the indoor environment 12 is subjected to a temporary increase of the level of humidity (for a given point of time). Thus, the term "humidity point load" is herein distinguished from a permanent increase of the level of humidity over a substantial time period or a temporary increase of the level of humidity over a substantial time period.

As mentioned above, the humidity point load refers to an increased level in humidity. The increased level of humidity may as an example refers to an increase of at least 4 percentage units in relative humidity. Typically, the increase in relative humidity in the indoor environment is derivable by measuring the difference in relative humidity between two adjacent humidity points. Hence, the magnitude of the humidity point load may be defined by a difference in relative humidity between two adjacent points of at least 4 percentage units. In one example embodiment, the reference point for determining the increase in humidity is the level of the average humidity in a series of humidity points subsequent to a humidity point indicating an increase in humidity in the indoor environment. In this context, the magnitude of the humidity point load refers to the contribution (increase) of humidity between the point Ha and the point Hp, i.e. the temporary increase in humidity as determined by the difference in humidity between the level of average humidity before the humidity point load and the humidity at the humidity peak point.

Thus, the humidity point load here refers to the contribution of humidity between the point Ha and the point Hp, i.e. the temporary increase in humidity as determined by the difference in humidity between the level of average humidity before the humidity point load and the humidity at the humidity peak point.

As shown in fig. 3, the level of the average humidity in a series of humidity points is here represented by reference numeral $H_a$, while the humidity point load is represented by reference numeral 91.

In this example embodiment, the magnitude of the increase in humidity between the humidity point and a series of humidity points subsequent to the humidity point should be at least 4% rH/h. It is to be noted that fig. 3 is not to scale and only illustrates a relevant period of time for the purposes of describing the example embodiments of the invention.

Typically, the increase in relative humidity of 4 percentage units (4% rH/h) should also occur under a period of 0.2h - 3h. However, the increase in relative humidity of 4 percentage units (4% rH/h) may usually occur in a period of 0.5h - 1h. Hence, a humidity point load may in some example embodiments refer to an increase in relative humidity equal to or above 4% rH/h under a period of time of 0.2h - 3h. Still preferably, a humidity point load may refer to an increase in relative humidity equal to or above 4% rH/h under a period of time of 0.5h - 1h.

In addition, it is to be noted that although humidity point loads are points of increased level of moisture content that may typically contribute to generate humidity related problems in the indoor environment, a humidity point load is merely a reflection of the humidity level at a given time, while humidity related problems often arise as a consequence of having a constant high level of humidity over an extended time. By identifying a humidity point load in the indoor environment according to the example embodiments, the method is capable of determining the ventilation rate and possibly finding indications on any deficiencies in the ventilation rate based on an analysis of a great amount of environmental indoor data that generally amounts to a relatively monotonous type of data, including a great amount of humidity level data over time. One advantage with the step of identifying a humidity point load from the relatively monotonous data is that the method is configured to discern whether the current ventilation process and the ventilation system is capable or incapable of mitigating the effects of the temporary increase of the humidity levels (corresponding to a temporary increase of the moisture content).

In some example embodiments, the method may further be configured to classify the detected point loads in order to sort out (or identify) non-relevant or inappropriate humidity point loads. As an example, the method may be configured to explicitly avoid further analysis of humidity level data that is not showing the characteristics according to a dilution characteristic or is not according to dilution process in order to avoid unnecessary processing of the data.

In step 130, the ventilation rate is determined based on a dilution characteristic of the measured humidity levels following the identified humidity point load 130. As an example, the step of determining the ventilation rate based on the dilution characteristic of the measured humidity levels following the humidity point load includes that the ventilation rate Q is determined by the formula:

$$Q = \frac{V \cdot \ln \frac{(H_p - H_a)}{(H_b - H_a)}}{t_b - t_p}$$

Wherein:

Q = Ventilation rate
V = Air volume of the indoor environment
$H_p$ = Humidity at a humidity peak point
$H_a$ = Average humidity before the humidity point load
$H_b$ = Humidity at an arbitrary time after the humidity peak point
$T_b$ = Time where $H_b$ is measured
$T_p$ = Time at humidity peak point

As mentioned above in relation to fig. 3, it is to be noted that the humidity at the humidity peak point may typically be obtained from the gathered environmental data, the humidity at the humidity point load may typically be obtained from the gathered environmental data (i.e. measured values), the average humidity before the humidity point load may be obtained from the gathered environmental data (i.e. measured values), the humidity at an arbitrary time after the humidity peak point may be obtained from the gathered environmental data (i.e. measured values), e.g. a value of the humidity level as measured three hours after the humidity peak point, while the time where $H_b$ is measured and the time at the humidity peak point may be obtained from the gathered environmental data. In addition, the air volume of the indoor environment is typically obtained from estimations or predetermined standard values.

It should, however, be readily appreciated that the above example on determining the ventilation rate Q based on the dilution process formula is only one of several available examples, and that the ventilation rate may be determined based on other modified dilution process formulas as long as the ventilation rate Q can be determined, based on a dilution characteristic of the measured humidity levels following said humidity point load, in a reliable and efficient manner.

In this context, the humidity peak point refers to the maximum level of the humidity. Further, in this context, as mentioned above, the humidity point load refers to contribution of humidity between the point Ha and the point Hp, i.e. the temporary increase in humidity as determined by the difference in humidity between the level of average humidity before the humidity point load and the humidity at the humidity peak point.

Typically, although not strictly necessary, the method may further comprise the step of estimating if the determined ventilation rate is within a reference value. The reference value may correspond to standards for the indoor environment. In this context, it should be readily conceivable that the reference value may be different for different indoor environments and may further depend on the conditions of the building, the age of the buildings, prevailing legislations or the like. However, as exact values for ventilation rates may vary for different indoor environments and for different buildings and areas due to weather etc, it is difficult, sometimes even impossible, to determine exact reference values on ventilation rates. Thus, it should be conceivable that the ultimate ventilation rate reference may typically be set based on research, field experiments occupant preferences, experience or standard values.

Further, it should be readily appreciated that the measured humidity levels following the identified humidity point load, as referred to in step 130 of the method, are typically obtained from the gathered environmental data.

Turning now to fig. 2b, there is provided some further examples on additional details of the example embodiment as described in relation to fig. 2a. As illustrated in fig. 2b, step 120 here further comprises the steps of determining the humidity turning point, as described in relation to fig. 3. Accordingly, in this example, the step of identifying a humidity point load 120 here comprises the steps of:

- allocating the gathered indoor environmental data as a function of time, thereby forming a data set containing a range of humidity level points for a given time frame 122,
- detecting a humidity turning point in the humidity level in the indoor environment from said range of humidity level points 124,
- whereby, if a humidity turning point is detected, the step of identifying a humidity point load further comprising the step of determining the level of humidity in a humidity level point before the humidity turning point 125, and
- determining the level of humidity in a plurality of humidity level points following the humidity turning point 126,
- wherein a humidity point load is established if the level of humidity in the humidity level point before the humidity turning point is lower than the level of humidity in the humidity turning point and the level of humidity in a plurality of humidity level points following the humidity turning point indicates a decrease in the level of humidity corresponding to a dilution process 128.

One example of the steps described in relation to fig. 2b is further described herein with respect to fig. 2c. Thus, in one example embodiment, the step of identifying a humidity point load here comprises the steps of:

- allocating the gathered indoor environmental data as a function of time, thereby forming a data set containing a range of humidity level points for a given time frame 122,
- determining a value of the derivative for a humidity level point in the data set 123,
- detecting a humidity turning point in the humidity level in the indoor environment based on the value of the derivative of a humidity level point, wherein the humidity turning point corresponds to a derivative being equal to zero 124a,
- whereby, if a humidity turning point is detected, said step of identifying a humidity point load further comprises the step of determining a gradient value of a humidity level point before the humidity turning point 125a and at least three gradient values on three humidity level points following the humidity turning point 126a,
- wherein a humidity point load is ascertain if the gradient value of the humidity level point before the humidity turning point is positive and above a threshold value and the at least three gradient values on three humidity level points following the humidity turning point are negative 128a.

In this context of the present invention, the threshold value of the gradient value may be set to e.g. 3, 4, 5 , 8 or the like.

Typically, the threshold value refers to an increase in the humidity level in the indoor environment immediately before the humidity turning point. Thus, the threshold value is typically an indication of an increase in the humidity level in the indoor environment.

As an example, the threshold value may be set so that a humidity point load is identified if the value of the humidity level point before the humidity turning point amounts to an increase in relative humidity above 4% rH/h. In other words, in this example embodiment, the method only identifies a humidity point load if the increase in relative humidity in the indoor environment is above 4% rH/h for a humidity level point before the humidity turning point.

It should be conceivable that if the threshold value is set low, there is a risk to identify too many humidity point loads, while if the threshold value is set high, there is a risk that no or very few humidity point loads are identified. Thus, the threshold value should be set and adjusted in view of the purpose, environment and installation of the system and method according to example embodiments.

Furthermore, it is to be noted that in the above example, the provision that at least three gradient values on three humidity level points following the humidity turning point are negative 128a is an indication on that a decrease in the level of humidity corresponds to a dilution process.

The step of detecting a humidity turning point in the humidity level in the indoor environment based on the value of the derivative of a humidity level point typically means that the method is searching for the peak of the humidity level (humidity turning point) in the relevant time frame.

As mentioned above, in order to detect that a humidity point constitutes a humidity turning point, the method according to example embodiments determines that the derivative of the point, as a function of time, is equal to zero. Optional, although not strictly required, the method according to example embodiments initially determines that the derivative of the point, as a function of time, is equal to zero, and then typically also determine that the level of humidity at an arbitrary time Tb after the humidity point 92 essentially corresponds to a normal level of humidity or the ambient humidity level. In this manner the process is capable of dealing with irregularities and possible fluctuations in the measurements of the humidity level, e.g. due to that some sensor modules may have an inherent error marginal, the sensor modules. The arbitrary time Tb may typically be set based on working conditions, operational conditions and type of sensor module. As an example, the arbitrary time Tb can be set to e.g. a time of three hours. Further details and definitions of the various humidity points as mentioned in this example embodiment, and in other example embodiments, such as the humidity turning point, the humidity point load etc. are described and illustrated in relation to fig. 3 above.

The step of determining a gradient value of a humidity level point before the humidity turning point and at least three gradient values on humidity level points following the humidity turning point, typically means that the method is analysing the level of humidity before the humidity turning point and analysing the level of humidity for a set of humidity level points (over a time range) following the humidity turning point to ascertain when, or if, the level of humidity in the indoor environment has reached a normal level of humidity corresponding to a dilution process.

As should be readily appreciated from the above description in relation to figs. 2a - 2c, the method according to example embodiments is typically configured to take monitored historical conditions in the indoor environment over a given time into consideration, while sorting out specific indoor environmental data (i.e. in the form of humidity point loads) reflecting an indication of e.g. a deficiency of the ventilation or the ventilation system.

Optionally, although strictly not necessary, the step of identifying a humidity point load may be followed by outputting a time series identifying where the point load occurs in the time series. In an example embodiment when the step of identifying a humidity point load may include an identification of a plurality of humidity point loads, the step is typically followed by outputting a time series identifying where each point load of the plurality of the point loads occur in the time series. That is, the step of identifying a plurality of humidity point loads in the indoor environment may further include the step of generating an overview of the plurality of identified humidity point loads representing a time series on when humidity point loads has occurred.

In one example embodiment, the step of identifying a plurality of humidity point loads in the indoor environment further includes the step of generating an overview of the plurality of identified humidity point loads representing a time series on when humidity point loads has occurred.

In all example embodiments as described herein, the method may further comprise the step of determining a ventilation rate control parameter based on a value of the determined ventilation rate.

In one example embodiment, the method may further comprise the step of comparing if the determined ventilation rate is within a reference value.

It is to be further noted that in an example embodiment when the step of identifying a humidity point load in the indoor environment based on the gathered indoor environmental data is continued until a plurality of humidity point loads, the step may simple be denoted as a step of identifying a plurality of humidity point loads in the indoor environment based on the gathered indoor environmental data. Typically, although not strictly required, the step of identifying a plurality of humidity point loads in the indoor environment based on the gathered indoor environmental data is thus performed on a continuous basis.

It is also to be noted that typically, although not strictly necessary, the step of identifying a plurality of humidity point loads in the indoor environment is performed subsequent in time to the step of gathering the indoor environmental data.

Furthermore, in all example embodiments herein, and in other example embodiments, the interval between the step of gathering the indoor environmental data and the step of identifying a plurality of humidity point loads in said indoor environment may in some occasions be several weeks, such as two weeks, still preferably several months, such as 2 months.

Furthermore, in all example embodiments herein, and in other example embodiments, the step of identifying a plurality of humidity point loads in the indoor environment is performed from a location remote from the indoor environment.

The present invention further relates to a method for recording climate changes over time in the indoor environment including the steps of the example embodiments described in relation to figs. 1 and 2a - 2c. In addition, the method may in this example embodiment be configured to detect and remedy failures and/or deficiencies in the ventilation system. In addition, or alternatively, the method can be configured to detect and remedy failures and/or deficiencies in the indoor environment. In addition, or alternatively, the method can be configured to identify resident units or apartments having unusually high level of humidity.

Fig. 2d shows one example of a method configured for recording climate changes over time in the indoor environment 200 including the steps of the example embodiments described in relation to figs. 1 and 2a - 2c. As an example, this example embodiment includes the steps of:

- gathering 110 of indoor environmental data from the indoor environment by means of the sensor module, wherein the indoor environmental data comprises a value on the humidity level in the indoor environment,
- identifying 120 a humidity point load of increased level of humidity in the indoor environment based on the gathered indoor environmental data,
- determining 130 a ventilation rate based on a dilution characteristic of the measured humidity levels following said point load, and further the step of
- recording 210 climate changes over time in said indoor environment based on said determined ventilation rate.

Although this example embodiment is based on the method as described in relation to fig. 2a, as mentioned above, the example embodiment as described in relation to fig. 2d, may further include any one of the steps as described in relation to fig. 2b and 2c. In one example embodiment, the method further comprises the step of determining if a ventilation system is operated at an appropriate level based on the determined ventilation rate. As an example, if the determined ventilation rate is considered to be significantly higher than a reference value of the ventilation rate of the ventilation system, this may indicate that the ventilation system is set to ventilate at higher ventilation grade than required to maintain a suitable indoor environmental comfort level.

The present invention further relates to a method for detecting ventilation deficiencies in an indoor environment including the steps of the example embodiments described in relation to figs. 1 and 2a - 2d. Fig. 2e shows one example of a method for detecting ventilation deficiencies in an indoor environment 300 including the steps of the example embodiments described in relation to figs. 1 and 2a - 2d. As an example, this example embodiment includes the steps of:

- gathering 110 of indoor environmental data from the indoor environment by means of the sensor module, wherein the indoor environmental data comprises a value on the humidity level in the indoor environment,
- identifying 120 a humidity point load of increased level of humidity in the indoor environment based on the gathered indoor environmental data,
- determining 130 a ventilation rate based on a dilution characteristic of the measured humidity levels following said point load, and further
- detecting 310 a ventilation deficiency in the indoor environment based on said determined ventilation rate.

In one example embodiment, the method further comprises the step of estimating if the determined ventilation rate is an indication of a deficiency of the ventilation system or the like. In other words, step 130 may further comprise the step of estimating if the determined ventilation rate is an indication of a deficiency of the ventilation system or the like.

In one example embodiment, the method further comprises the step of estimating if the determined ventilation rate is within a reference value. The reference value may correspond to standards for the indoor environment. In this context, it should be readily conceivable that the reference value may be different for different indoor environments and may further depend on the conditions of the building, the age of the buildings, prevailing legislations or the like.

However, as exact values for ventilation rates may vary for different indoor environments and for different buildings and areas due to weather etc, it is difficult, sometimes even impossible, to determine exact reference values on ventilation rates. Thus, it should be conceivable that the ultimate ventilation rate reference may typically be set based on research, field experiments occupant preferences, experience or standard values.

Similar to the example described in relation to fig. 2d, in one example embodiment, the method may here further comprise the step of determining if a ventilation system is operated at an appropriate level based on the determined ventilation rate. That is, the method comprises the step of estimating if the determined ventilation rate is within a reference value.

As an example, if the determined ventilation rate is considered to be significantly higher than a reference value of the ventilation rate of the ventilation system, this may indicate that the ventilation system is set to ventilate at higher ventilation grade than required to maintain a suitable indoor environmental comfort level.

Typically, although not strictly required, the step of detecting 310 a ventilation deficiency in the indoor environment based on the determined ventilation rate may further include the step of determining a reference level of the humidity level. One example of a reference level of the humidity level may be 3 g/m$^2$. In addition, step 310 may also include the step of measuring a humidity level for a given time and comparing the measured humidity level with the reference level of the humidity level. In this manner, the method may be configured to determine whether the measured level of humidity is unusual or remarkable high. To this end, the method is capable of estimating both the ventilation rate and the level of humidity in the indoor environment. Thus, the method can determine if the generation of humidity in the indoor environment is above normal levels. If the above additional steps are included in the example embodiment of the method 300 as illustrated in fig. 2e, it becomes possible to further improve the method so that an end-user of the method can identify if the determined high level of humidity is due to a deficiency of the ventilation system or due to a remarkable high generation of humidity in the indoor environment.

Although the example embodiment described in relation to fig. 2e is based on the method as described in relation to fig. 2a, as mentioned above, the example embodiment as described in relation to fig. 2e may further include any one of the steps as described in relation to fig. 2b - 2d.

The present invention also relates to a method for identifying resident units or apartments having a detrimental high level of humidity, including the steps of the example embodiments described in relation to figs. 1 and 2a - 2e. Fig. 2f shows one example of a method for identifying resident units or apartments having a high level of humidity 400, including the steps of the example embodiments described in relation to figs. 1 and 2a - 2e. As an example, this example embodiment includes the steps of:

- gathering 110 of indoor environmental data from the indoor environment by means of the sensor module, wherein the indoor environmental data comprises a value on the humidity level in the indoor environment,
- identifying 120 a humidity point load of increased level of humidity in the indoor environment based on the gathered indoor environmental data,
- determining 130 a ventilation rate based on a dilution characteristic of the measured humidity levels following said point load, and further
- identifying 410 resident units or apartments having a high level of humidity based on said determined ventilation rate.

In this manner, it becomes possible to determine whether a high level of humidity in the indoor environment is caused by the behaviour of the individuals living in the indoor environment or by a deficiency of the ventilation system. Although this example embodiment is based on the method as described in relation to fig.

2a, as mentioned above, the example embodiment as described in relation to fig. 2f, may further include any one of the steps as described in relation to fig. 2b - 2e.

Typically, although not strictly required, the step of identifying 410 resident units or apartments having a high level of humidity based on the determined ventilation rate may further include the step of determining a reference level of the humidity level. One example of a reference level of the humidity level may be 3 g/m$^2$. In addition, step 410 may also include the step of measuring a humidity level for a given time and comparing the measured humidity level with the reference level of the humidity level. In this manner, the method may be configured to determine whether the measured level of humidity is unusual or remarkable high. To this end, the method is capable of estimating both the ventilation rate and the level of humidity in the indoor environment. Thus, the method can determine if the generation of humidity in the indoor environment is above normal levels. If the above additional steps are included in the example embodiment of the method 400 as illustrated in fig. 2f, it becomes possible to further improve the method so that an end-user of the method can identify if the high level of humidity in the resident units or apartments is due to a deficiency of the ventilation system or due to a remarkable high generation of humidity in the indoor environment.

The present invention also relates to a method for adjusting a ventilation rate of a ventilation system for an indoor environment, including the steps of the example embodiments described in relation to figs. 1 and 2a - 2f. Fig. 2g shows one example of a method for adjusting a ventilation rate of a ventilation system for an indoor environment 500, including the steps of the example embodiments described in relation to figs. 1 and 2a - 2f. As an example, this example embodiment includes the steps of:

- gathering 110 of indoor environmental data from the indoor environment by means of the sensor module, wherein the indoor environmental data comprises a value on the humidity level in the indoor environment,
- identifying 120 a humidity point load of increased level of humidity in the indoor environment based on the gathered indoor environmental data,
- determining 130 a ventilation rate based on a dilution characteristic of the measured humidity levels following said point load, and further
- adjusting 510 a ventilation rate of a ventilation system for an indoor environment based on said determined ventilation rate.

In one example embodiment, the method further comprising the step of determining a ventilation rate control parameter based on a value of the determined ventilation rate. Thus, in this example, a ventilation rate of a ventilation system for an indoor environment is adjusted based on the ventilation rate control parameter.

For instance, the determined ventilation rate can be used as input to a mechanical ventilation system, such as a ventilation system including a fan. In this type of mechanical ventilation systems, the fan rate or fan effect can be reduced based on the value of the determined ventilation rate in order to ensure that the mechanical ventilation system is operating at an appropriate speed. Although the mechanical ventilation system may sometimes operate at a low ventilation rate, it has also been observed that the ventilation rate may be inappropriately high, for instance during winter season. This is particularly devastating for the comfort level in the indoor environment since the ventilation system is set to replace the interior air with cold outside air, which forces the warmer interior air towards the ceiling area due to thermal. That is, the warmer air has a lower density than the cool air, and thus creates upward convective flows known as thermal plumes. Accordingly, during winter season, a ventilation system set to replace the indoor air with cold outside air at a high rate, high ventilation rate, may cause the temperature in the indoor environment to fall below the comfort level. It is thus desirable to monitor the ventilation rate in order to adjust the ventilation rate of a ventilation system for an indoor environment to maintain the temperature in the indoor environment at a comfort level.

Although this example embodiment is based on the method as described in relation to fig. 2a, as mentioned above, the example embodiment as described in relation to fig. 2g, may further include any one of the steps as described in relation to fig. 2b - 2f.

Thanks to the method and the configuration of the processing unit as described in relation to the example embodiments, it becomes possible to determine the ventilation rate in an efficient and accurate manner.

In addition, the method according to example embodiments further provides a possibility to associate ventilation rate in buildings to relevant national standards. Another possibility with the method is to replace existing compulsory ventilation inspections. In addition, the method contributes to better understand how failures within the ventilation system can cause imbalances in the heat supply of the building. The method according to example embodiments further provides a possibility to associate ventilation rate for indoor environments, such as buildings, to relevant national standards.

Although the invention has been described in relation to specific combinations of method steps and sensor configurations, it should be readily appreciated that more than four sensor modules can be included in the sensor system and the sensor modules may be arranged in other locations, rooms, apartments, buildings or the like as well which is clear for the skilled person when studying the present application. Thus, the above description of the example embodiment of the present invention and the accompanying drawings are to be regarded as a non-limiting example of the invention and the scope of protection is defined by the appended claims. Any reference sign in the claims should not be construed as limiting the scope.

**Claims**

1. A method (100) for determining ventilation rate within an indoor environment by means of a processing unit and a sensor module, said method (100) comprising the steps of:

   - gathering (110) of indoor environmental data from the indoor environment by means of said sensor module, wherein the data comprises a value on the humidity level in the indoor environment,
   - identifying (120) a humidity point load of increased level of humidity in said indoor environment based on said gathered indoor environmental data,
   - determining (130) the ventilation rate based on a dilution characteristics of the measured humidity levels following said humidity point load.

2. Method according to claim 1, wherein, when a humidity point load is identified by said step (120), the method is configured to determine the level of average humidity before the humidity point load.

3. Method according to claim 1 or claim 2, wherein the ventilation rate is determined by the dilution process formula:

$$Q = \frac{V \cdot \ln\dfrac{(H_p - H_a)}{(H_b - H_a)}}{t_b - t_p}$$

Wherein:

   Q = Ventilation rate
   V = Air volume of the indoor environment
   $H_p$ = Humidity at the humidity peak point
   $H_a$ = Average humidity before humidity point load
   $H_b$ = Humidity at an arbitrary time after the humidity peak point
   $T_b$ = Time where $H_b$ is measured
   $T_p$ = Time at the humidity peak point

4. Method according to any one of the preceding claims, wherein the step of identifying a humidity point load (120) comprises the steps of:

   - allocating (122) the gathered indoor environmental data as a function of time, thereby forming a data set containing a range of humidity level points for a given time frame,
   - detecting (124) a humidity turning point in the humidity level in the indoor environment from said range of humidity level points,

- whereby, if a humidity turning point is detected, said step is determining the level of humidity in a humidity level point before the humidity turning point (125), and

- determining the level of humidity in a plurality of humidity level points following the humidity turning point (126),

- wherein a humidity point load is established if the level of humidity in the humidity level point before the humidity turning point is lower than the level of humidity in the humidity turning point and the level of humidity in a plurality of humidity level points following the humidity turning point indicates a decrease in the level of humidity corresponding to a dilution process (128).

5. Method according to any one of the preceding claims, wherein the step of identifying a humidity point load (120) comprises the steps of:

- allocating (122) the gathered indoor environmental data as a function of time, thereby forming a data set containing a range of humidity level points for a given time frame,

- determining (123) a value of the derivative for a humidity level point in the data set,

- detecting (124a) a humidity turning point in the humidity level in the indoor environment based on said value of the derivative of a humidity level point, wherein the humidity turning point corresponds to a derivative being equal to zero,

- whereby, if a humidity turning point is detected, said step is determining a gradient value of a humidity level point before the humidity turning point (125a) and at least three gradient values on three humidity level points following the humidity turning point (126a),

- wherein a humidity point load is ascertain if the gradient value of the humidity level point before the humidity turning point is positive and above a threshold value and the at least three gradient values on said three humidity level points following the humidity turning point are negative (128).

6. Method according to any one of the preceding claims, wherein the step (120) further comprises the step of outputting a time series identifying the humidity point load.

7. Method according to any one of the preceding claims, wherein the step (120) of identifying a humidity point load in said indoor environment is continued until at least a plurality of discrete humidity point loads are identified.

8. Method according to any one of the preceding claims, wherein the method further comprises the step of estimating if the determined ventilation rate is within a reference value and/or the step of determining a ventilation rate control parameter based on a value of the determined ventilation rate.

9. Method according to any one of the preceding claims, wherein the step of gathering indoor environmental data is performed continuously to provide a plurality of humidity values representing the humidity in the indoor environment over a given time range.

10. Method according to any one of the preceding claims, wherein said indoor environmental data further comprises a value on the temperature level in the indoor environment.

11. Method according to any one of the preceding claims, wherein the step (120) of identifying a humidity point load in said indoor environment is performed subsequent in time to the step (110) of gathering indoor environmental data.

12. Method according to any one of the preceding claims, wherein the step (120) of identifying a humidity point load in said indoor environment is performed from a location remote from said indoor environment.

13. A method for recording climate changes over time in the indoor environment including the steps of the method according to any one of the preceding claims and the step (210) of recording climate changes over time in said indoor environment based on said determined ventilation rate.

14. A method for detecting ventilation deficiencies in the indoor environment including the steps of the method according to any one of the claims 1-12 and the step (310) of detecting a ventilation deficiency in the indoor environment based on said determined ventilation rate.

15. A method for identifying resident units or apartments having high level of humidity, said method includes the steps of the method according to any one of the claims 1-12 and the step (410) of identifying resident units or apartments having a high level of humidity based on said determined ventilation rate.

16. A processing unit (30) configured for implementing a method according to any one of the preceding claims.

FIG. 1

FIG. 2a

FIG. 2b

FIG. 2c

FIG. 2d

FIG. 2e

FIG. 2f

FIG. 2g

FIG. 3

Europäisches
Patentamt

European
Patent Office

Office européen
des brevets

# EUROPEAN SEARCH REPORT

Application Number

EP 16 16 7317

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 450 640 A2 (GREENWOOD AIR MAN LTD [GB]) 9 May 2012 (2012-05-09) | 1,2,4-7, 9-16 | INV. F24F11/00 F24F7/00 G05D22/02 |
| A | * paragraph [0087]; figure 2 * | 3,8 | |
| X | DE 101 22 435 A1 (HEIN WERNER [DE]) 30 January 2003 (2003-01-30) | 1,9-16 | |
| A | * abstract; claims 1-3 * | 2-8 | |
| X | DE 10 2010 011904 A1 (GROHMANN HERBERT [DE]) 22 September 2011 (2011-09-22) | 1,2,4-7, 9-16 | |
| A | * abstract; claim 1; figure 2 * | 3,8 | |
| X | WO 98/07083 A1 (RAY HUDSON LIMITED [GB]; HUDSON RAYMOND JOHN [GB]) 19 February 1998 (1998-02-19) | 1,2,4-7, 9-16 | |
| A | * abstract; claim 1; figure 3; table 1 * | 3,8 | |

TECHNICAL FIELDS
SEARCHED     (IPC)

F24F
G05D

The present search report has been drawn up for all claims

| Place of search | Date of completion of the search | Examiner |
|---|---|---|
| Munich | 14 October 2016 | Degen, Marcello |

EPO FORM 1503 03.82 (P04C01)

## ANNEX TO THE EUROPEAN SEARCH REPORT
## ON EUROPEAN PATENT APPLICATION NO.

EP 16 16 7317

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2016

| Patent document cited in search report | | Publication date | Patent family member(s) | | Publication date |
|---|---|---|---|---|---|
| EP 2450640 | A2 | 09-05-2012 | EP | 2450640 A2 | 09-05-2012 |
| | | | GB | 2485354 A | 16-05-2012 |
| DE 10122435 | A1 | 30-01-2003 | NONE | | |
| DE 102010011904 | A1 | 22-09-2011 | NONE | | |
| WO 9807083 | A1 | 19-02-1998 | AT | 229664 T | 15-12-2002 |
| | | | CA | 2262657 A1 | 19-02-1998 |
| | | | DE | 69717821 D1 | 23-01-2003 |
| | | | EP | 0917677 A1 | 26-05-1999 |
| | | | JP | 2001500291 A | 09-01-2001 |
| | | | US | 6230980 B1 | 15-05-2001 |
| | | | WO | 9807083 A1 | 19-02-1998 |

EPO FORM P0459

For more details about this annex : see Official Journal of the European Patent Office, No. 12/82